(19) Europäisches Patentamt
European Patent Office
Office européen des brevets

(11) **EP 1 950 333 A1**

(12) **EUROPEAN PATENT APPLICATION**
published in accordance with Art. 158(3) EPC

(43) Date of publication:
**30.07.2008 Bulletin 2008/31**

(51) Int Cl.:
*D04H 1/72* *(2006.01)*   *A47J 31/06* *(2006.01)*
*B32B 5/26* *(2006.01)*   *D04H 1/54* *(2006.01)*

(21) Application number: 05807107.7

(22) Date of filing: **15.11.2005**

(86) International application number:
**PCT/JP2005/020924**

(87) International publication number:
**WO 2007/057942 (24.05.2007 Gazette 2007/21)**

(84) Designated Contracting States:
**DE FR GB**

(71) Applicant: **Kinsei Seisi Co., Ltd.**
**Kochi-shi**
**Kochi 780-0921 (JP)**

(72) Inventors:
• **YASUMITSU, Yasuji**
  **Kochi-shi, Kochi 7800921 (JP)**

• **SANNOMIYA, Osamu**
  **Kochi-shi, Kochi 7800921 (JP)**
• **OISHI, Atsuko**
  **Kochi-shi, Kochi 7800921 (JP)**
• **YAMAZAKI, Yasuyuki**
  **Kochi-shi, Kochi 7800921 (JP)**

(74) Representative: **Henkel, Feiler & Hänzel**
**Patentanwälte**
**Maximiliansplatz 21**
**80333 München (DE)**

(54) **AIR-LAID SHEET FOR FOOD EXTRACTION**

(57)     There is provided a sheet for food extraction using no chemical such as a chemical binder or a papermaking aid, using an adhesive composite fiber as a raw material, exerting no influence on the global environment, being excellent in safety to the human body and sanitation, and satisfying performance such as bag-making processability, heat stability, uniformity in texture, extraction properties and prevention of powder leakage, by an air-laid sheet for food extraction produced by preparing a fiber web (1), by an air-laid process, which mainly comprises a heat-adhesive composite fiber (A) having a fineness of 1.0 to 4.5 dt wherein a sheath component as a low-melting component of a sheath-core type composite fiber or a low-melting component of a side-by-side type composite fiber has a melting point of 110 to 170˚C, and performing interfiber bonding by heating to achieve integration.

**Description**

Technical Field

The present invention relates to an air-laid sheet for food extraction, which is obtained by forming a porous sheet such as a nonwoven fabric into a bag form and used for drinks such as green tea, tea, barley tea, coffee and juice, flavored soups such as stock and broth, and the like.

Background Art

There have hitherto been used so-called green tea bags, tea bags, coffee bags and the like in which tea leaves are contained in bags formed by paper, nonwoven fabrics and the like. The green tea bags and the like are placed in cups, and water is poured therein, thereby extracting tea leaf components in main bodies of the bags. Alternatively, dried fishes such as dried sardines and dried bonitos or stock such as kelp contained in bags are placed in vessels as instant bouillon, and decocted in hot water, thereby being utilized as flavored soups. When these bags are used, users are not required to directly handle powders. Accordingly, cooking workability can be improved.

For sheet materials of these bags, there have already been some proposals. Examples thereof include an extraction filter material decreased in powder leakage by compositing nonwoven fabrics comprising ultrafine fibers such as melt blow nonwoven fabrics (patent document 1: JP-A-6-65851), a wet nonwoven fabric containing a sheath-core type composite fiber of specific components, having no floating fiber in paper making and having heat-sealing properties (patent document 2: JP-A-9-268434), a card nonwoven fabric or spun bond nonwoven fabric obtained by compositing a heat-sealing layer and a non-heat-sealing layer (patent document 3: JP-A-2001-315239), a nonwoven fabric containing a sheath-core thermal binder fiber in an amount of 20% by weight or more and having a specific filtration rate and filtration area (patent document 4: JP-A-9-271617), and the like.

However, the process of patent document 1 can prevent powder leakage by the ultrafine fiber non-woven fabric, but clogging easily occurs, and not only it takes time to perform extraction, but also the liquid concentration tends to be low. Further, the wet nonwoven fabric of patent document 2 is only a proposal with respect to a wet nonwoven fabric paper made in a wet process, and paper-making aids such as a fiber dispersant, a viscosity improver and a foaming inhibitor are used in paper making in many cases. These agents are chemical agents, and remain in trace amounts in drainage water from the paper-making process and paper produced. It is difficult to completely deny the possibility of exerting some kind of influence on the global environment and the human body. Considering more complete safety and a feeling of security, it is quite unlikely to be high in safety for human drinking use, and there is also an opinion that this is not a preferred method. The nonwoven fabric of patent document 3 has a structure in which consideration is given to heat-sealing properties. However, a process of manufacturing the nonwoven fabric is a card process or a spun bond process, and contents excellent in texture and uniformity are not proposed. Accordingly, problems of risk of powder leakage and low strength stability of a heat-sealed portion are left unsolved due to ununiformity. Further, the nonwoven fabrics described in patent documents 2 and 3 have also a disadvantage of being longitudinally strong and laterally weak. Furthermore, the nonwoven fabric of patent document 4 has the above-mentioned problems, because a method of manufacturing the nonwoven fabric is also a so-called existing manufacturing method such as needle punching or thermal bonding.

Like this, nothing has satisfied all performance such as bag-making processability, heat stability, uniformity in texture and extraction properties, which are required for this use.

Patent Document 1: JP-A-06-65851
Patent Document 2: JP-A-09-268434
Patent Document 3: JP-A-2001-315239
Patent Document 4: JP-A-09-271617

Further, in an air-laid nonwoven fabric which has been previously known, a pulp fiber layer is used as a base, and a surface layer thereof is sprayed, coated or fully impregnated with a chemical binder resin of the acrylic acid ester family or polyvinyl acetate family to form interfiber bonds. This method is unfavorable, because there is a fear of the occurrence of a slight amount of residual monomer or formalin as a crosslinking agent.

Like this, the sheets for food extraction require practical performance such as rapid extraction of components to be extracted and leakage prevention of fine powders, bag-making processability such as heat sealing or ultrasonic sealing and melt cutting, sealing performance of being not separated by hot water and balanced strength having less directionality, and the like. In particular, in order to achieve the compatibility of extraction properties and prevention of powder leakage, stable nonwoven fabric strength and sealing strength, each of the wet nonwoven fabric, card process nonwoven fabric, spun bond nonwoven fabric and melt blow nonwoven fabric which have hitherto been used and proposed has inadequacies, and it is quite unlikely to be complete.

Disclosure of the Invention

Problems That the Invention Is to Solve

The present invention has been made to solve such problems, and an object thereof is to provide a sheet for food extraction excellent in extraction properties, prevention of powder leakage, heat-sealing properties, heat stability, bag-making processability and uniformity in texture, and also excellent in safety.

Means for Solving the Problems

The present invention relates to an air-laid sheet for food extraction (hereinafter also referred to as a "sheet (1) for food extraction") produced by preparing a fiber web (1), by an air-laid process, which mainly comprises a heat-adhesive composite fiber (A) having a fineness of 1.0 to 4.5 dt wherein a sheath component as a low-melting component of a sheath-core type composite fiber or a low-melting component of a side-by-side type composite fiber has a melting point ($Tm_A$) of 110 to 170 ˚C, and performing interfiber bonding by heating to achieve integration.
In the above-mentioned sheet (1) for food extraction, the basis weight of the fiber web (1) is preferably from 10 to 50 g/m$^2$.
Further, the melting point ($Tm_A$) of the low-melting component of the heat-adhesive composite fiber (A) is preferably from 110 to 155˚C.
The above-mentioned fiber web (1) as used herein is preferably composed of 100% heat-adhesive composite fiber (A) .
Further, the above-mentioned heat-adhesive composite fiber (A) is preferably a polyester-based fiber.
Then, the present invention relates to an air-laid composite sheet for food extraction (hereinafter also referred to as a "sheet (2) for food extraction") comprising at least two fiber web layers, wherein one fiber web is the above-mentioned fiber web (1), and a fiber web on the opposite side is a fiber web (2) with a basis weight of 2 to 30 g/m$^2$ which comprises a mixture of a heat-adhesive composite fiber (B) having a fineness of 1.0 to 4.5 dt wherein a sheath component as a low-melting component of a sheath-core type composite fiber or a component on the low-melting side of a side-by-side type composite fiber has a melting point ($Tm_B$) of 130 to 200 ˚C and a high-melting synthetic fiber (C) having a melting point ($Tm_C$) of 200˚C or higher and a fineness of 0.5 to 7.0 dt; the melting point $Tm_A$ of the component on the low-melting side of the heat-adhesive composite fiber (A) and the above-mentioned $Tm_B$ satisfies the following equation (1); and these fiber webs are prepared in a layer form by an air-laid process, and interfiber bonding is performed by heating to achieve integration.

$$Tm_A \leq Tm_B \ \cdots \cdots \ (1)$$

Here, the basis weight of the above-mentioned fiber web (1) constituting the sheet (2) for food extraction is preferably from 2 to 30 g/m$^2$.
Further, the melting pint ($Tm_A$) of the low-melting component of the heat-adhesive composite fiber (A) constituting the above-mentioned fiber web (1) is preferably from 110 to 155˚C.
Furthermore, the melting point ($Tm_B$) of the component on the low-melting side of the heat-adhesive composite fiber (B) and the melting point ($Tm_C$) of the high-melting synthetic fiber (C) both constituting the fiber web (2) are preferably from 140 to 180˚C and from 210 to 280˚C, respectively.
The heat-adhesive composite fibers (A) and (B) and the high-melting synthetic fiber (C) constituting the fiber webs (1) and (2) are each preferably a fiber comprising a polyester-based component.
In addition, the mixing ratio of the heat-adhesive composite fiber (B) and the high-melting synthetic fiber (C) constituting the fiber web (2) is preferably from 80/20% by weight to 30/70% by weight.
Further, the fiber web (1) is preferably composed of 100% heat-adhesive composite fiber (A), and the fiber web (2) is preferably composed of 100% heat-adhesive composite fiber (B) and high-melting synthetic fiber (C).
Next, the present invention relates to a composite air-laid sheet for food extraction (hereinafter also referred to as a "sheet (3) for food extraction") produced by forming the above-mentioned fiber web (1) by an air-laid process on one side of a wet nonwoven fabric comprising pulp and the above-mentioned heat-adhesive composite fiber (A) mixed at a ratio of 97/3% to 70/30% by weight and having a basis weight of 2 to 30 g/m$^2$ and an air permeability of 1.5 seconds or less, and laminating and integrating them.
Here, the basis weight of the above-mentioned fiber web (1) constituting the sheet (3) for food extraction is preferably from 2 to 30 g/m$^2$.
Further, the above-mentioned fiber web (1) formed by the air-laid process preferably contains 80% or more of the heat-adhesive composite fiber (A).
Furthermore, the melting point ($Tm_A$) of the low-melting component of the heat-adhesive composite fiber (A) constituting the above-mentioned fiber web (1) and wet nonwoven fabric is preferably from 110 to 155˚C.

In addition, the heat-adhesive composite fiber (A) is preferably a fiber comprising a polyester-based component.

Advantages of the Invention

In the sheets (1) to (3) for food extraction of the present invention, a nonwoven fabric suitable as a sheet for food extraction is provided by using a heat-adhesive fiber, based on an air-laid process excellent in uniformity of fiber dispersion, good texture, longitudinal/lateral strength balance and the like, and further improving the kind, melting point, and fineness of fiber, the basis weight of the nonwoven fabric, heat treatment conditions and the like.

Further, according to the sheet (2) for food extraction of the present invention, processing suitability of processing machinery for heat sealing, ultrasonic sealing or the like can be improved by using a heat-adhesive composite fiber and making a constitution of a surface layer different from that of a back layer to provide a difference in melting point. Furthermore, according to the sheet (3) for food extraction of the present invention, there is provided a sheet for food extraction produced by using as a base material a wet nonwoven fabric mainly comprising pulp as a constituent and having a low basis weight and high air permeability, forming a heat-adhesive composite fiber layer on one side thereof by an air-laid process, and conducting heat treatment to achieve integration. The heat-adhesive composite fiber layer formed by the air-laid process exhibits strength balanced in longitudinal/lateral directions and having water resistance, and further provides a heat-sealing layer surface excellent in uniformity. A surface of the wet nonwoven fabric mainly composed of pulp bears hydrophilicity necessary for food extraction, and has a feature of non-adhesiveness to a sealing bar of a heat-sealing bag-making machine because of its non-heat-sealing properties. It becomes therefore possible to perform speed-up by elevating the sealing temperature. Moreover, the merit of little risk of adhering or fusing to the sealing bar is exhibited, even in the event that a process trouble occurs to cause a standstill of the machine.

In the above-mentioned sheets (1) to (3) of the present invention, the heat-adhesive composite fiber is used, and an auxiliary material, an additive, an additional agent and the like are not used at all, so that a sheet for food extraction having high safety can be obtained.

Best Mode for Carrying Out the Invention

The sheets (1) to (3) for food extraction of the present invention will be described below.

Sheet (1) for Food Extraction

Formation of Fiber Layer by Air-Laid Nonwoven Fabric Production Process:

In the sheet (1) for food extraction of the present invention, a fiber web (1) is formed by an air-laid nonwoven fabric production process. That is to say, heat-adhesive composite fibers (A) having a fiber length of 2 to 10 mm and a fineness of 1.0 to 4.5 dt are blasted from a single blast portion or multiple blast portions positioned over a porous net conveyer to form the fiber web (1) on the net conveyer while sucking with an air suction portion arranged under the net conveyer. Then, interfiber bonds are formed by hot air treatment and/or hot pressing calendering treatment to achieve integration as a nonwoven fabric.

The web is finished to a specified thickness by adjusting the fiber mount, blast conditions, air suction conditions, heat treatment conditions and the like, thereby being able to obtain the fiber web (1) used in the present invention.

In the present invention, the use of the air-laid process can provide a sheet for food extraction in which single fibers are well dissociated and the amount of bundle-like fibers is small, resulting in excellent texture and uniformity. Further, there is less directionality in fiber arrangement, and the difference in strength between in longitudinal and lateral directions is small. Moreover, different from a wet nonwoven fabric, no paper-making aid is used, so that this is excellent also in safety.

The heat-adhesive composite fiber (A) may be any fiber, as long as it is a fiber fusible by heat to bond mutually. However, the melting point ($Tm_A$) of a heat-adhesive component as a low-melting component is required to be 110 to 170˚C. It is preferably from 110 to 155˚C. In the case of less than 110˚C, risk of the separation of a sealed portion in hot water is liable to occur. In the case of barley tea, soup or the like, the sealed portion is particularly required not to be separated even when immersed in boiled water for several minutes to tens of minutes . Accordingly, the melting point is important. Further, a polymer having high crystallinity is more preferred, because it is characterized by that the bond is hard to be loosen at a temperature lower than the melting point. On the other hand, exceeding 170˚C necessitates high temperature and low speed in a heat-sealing or ultrasonic sealing process of bag-making processing, which impractically causes a decrease in productivity.

As the heat-adhesive composite fiber (A), suitable are a sheath-core type in which a low-melting component is used as a sheath component or an external component, and a high-melting component is used as a core component or an internal component, and a side-by-side type in which one is a low-melting component, and the other is a high-melting component. Combinations of both components of these composite fibers include PP/copolymerized PP, PET/PE, PET/copolymerized PP, PET/ copolymerized PET (low-melting copolymerized polyester) and the like.

In particular, the polyester family is somewhat easier to fit in water than the olefin family, and moreover, has a specific gravity of more than 1, so that it is easy to sediment. It is therefore suitable. As for green tea bags, ones which are easy to sink into water are usually easy to use. Examples of the above-mentioned low-melting copolymerized polyesters as used herein include a modified copolymer of polyethylene terephthalate, polypropylene terephthalate, polybutylene terephthalate or the like as a basic skeleton with an aromatic dicarboxylic acid such as isophthalic acid or 5-metal isophthalate, an aliphatic dicarboxylic acid such as adipic acid or sebacic acid, an aliphatic polyhydric alcohol such as diethylene glycol, propylene glycol or 1,4-butanediol, or the like.

Further, a polymer having high crystallinity is more preferred, because it is characterized by that the bond is hard to be loosen at a temperature lower than the melting point.

The fiber length of the heat-adhesive composite fiber (A) is preferably from 2 to 10 mm, and more preferably from 3 to 6 mm. When the fiber length is less than 2 mm, the fiber comes close to a powder form, so that the rate at which the fiber falls off through a porous net conveyer becomes high, resulting not only in poor yield to cause an increase in cost, but also in difficult processing. On the other hand, when the fiber length exceeds 10 mm, the amount of spun fiber decreases. Accordingly, not only productivity deteriorates, but also dispersion of the fiber deteriorates, which tends to have an influence also on extraction properties and performance of preventing powder leakage.

Further, the fineness of the heat-adhesive composite fiber (A) is from 1.0 to 4.5 dt, and preferably from 1.5 to 3. 5 dt. When the fineness is less than 1.0 dt, the fibers come close to one another, which causes not only deterioration of extraction properties through minute pores formed among the fibers, but also a tendency of inducing clogging. Further, unopened or undispersed fibers increase to cause a tendency of deteriorating nonwoven fabric texture. On the other hand, when the fineness exceeds 4.5 dt, extraction speed increases, but a fine green tea powder or food powder becomes easy to leak, resulting in unsuitability for this use.

In addition, the heat-adhesive composite fiber (A) may be either crimped or not, or may be strand chops. When crimped, both of a zigzag-shaped two-dimensionally crimped fiber and a spiral-shaped or ohm-shaped three-dimensionally (sterically) crimped fiber can be used.

In the above-mentioned sheet (1) for food extraction as used herein, it is preferred that the fiber web (1) is composed of 100% heat-adhesive composite fiber (A). However, a fiber other than the heat-adhesive composite fiber (A), for example, PP fiber, PET fiber, PET fiber, nylon 6 fiber, nylon 6, 6 fiber, aromatic polyamide fiber, acrylic fiber, synthetic pulp (for example, fibrillated fiber using PE or PP as a raw material, such as SWP manufactured by Mitsui Chemicals, Inc.), wood pulp, hemp, cotton, rayon, viscose fiber or the like, may be mixed therewith within the range not impairing the spirit and effect of the present invention. In this case, it is preferred that the ratio of the other fiber is confined to 10% by weight or less. Exceeding 10% by weight results in not only an influence on nonwoven fabric strength or heat-sealing properties, but also easy falling-off of fibers having no heat adhesiveness in practical use.

The basis weight of the fiber web (1) is from 10 to 50 $g/m^2$, and preferably from 15 to 40 $g/m^2$. Less than 10 $g/m^2$ results in not only a decrease in strength to cause risk of bag breakage at the time of bag-making processing and practical use, but also easy leakage of a fine green tea powder or food powder, because of widened interfiber clearance. On the other hand, a basis weight exceeding 50 $g/m^2$ results in deterioration of extraction properties.

Sheet (2) for Food Extraction

The sheet (2) for food extraction comprises at least two fiber web layers, wherein one fiber web is the above-mentioned fiber web (1), and a fiber web on the opposite side is a fiber web (2) with a basis weight of 2 to 30 $g/m^2$ which comprises a mixture of a heat-adhesive composite fiber (B) having a fineness of 1.0 to 4.5 dt wherein a sheath component as a low-melting component of a sheath-core type composite fiber or a component on the low-melting side of a side-by-side type composite fiber has a melting point ($Tm_B$) of 130 to 200 ˚C and a high-melting synthetic fiber (C) having a melting point ($Tm_C$) of 200˚C or higher and a fineness of 0.5 to 7.0 dt; the melting point $Tm_A$ of the component on the low-melting side of the heat-adhesive composite fiber (A) and the above-mentioned $Tm_B$ satisfies the following equation (1); and these fiber webs are prepared in a layer form by an air-laid process, and interfiber bonding is performed by heating to achieve integration.

$$Tm_A \leq Tm_B \quad \cdots\cdots \quad (1)$$

Formation of Fiber Layer by Air-Laid Nonwoven Fabric Production Process:

A fiber web is formed by an air-laid nonwoven fabric production process in the same manner as in the sheet (1) for food extraction. That is to say, the fibers are blasted from multiple blast portions positioned over a porous net conveyer to form the fiber web on the net conveyer while sucking with an air suction portion arranged under the net conveyer. In this case, the fibers are sequentially blasted to form two layers changed in fiber constitution, thereby preparing a laminated web. Then, interfiber bonds are formed by hot air treatment and/or hot pressing calendering treatment to achieve integration as a nonwoven fabric.

The web is finished to a specified thickness by adjusting the fiber mount, blast conditions, air suction conditions, heat treatment conditions and the like, thereby being able to obtain the fiber layer used in the present invention.

It is preferred that the sheet (2) for food extraction comprises at least two fiber web layers of a low-melting fiber web (fiber web (1)) and a high-melting fiber web (fiber web (2)).

The above-mentioned heat-adhesive composite fiber (A) is used in the above-mentioned fiber web (1).

On the other hand, a mixture of a heat-adhesive composite fiber (B) and a high-melting synthetic fiber (C) is used as a high-melting fiber web (2). As the heat-adhesive composite fiber (B), any fiber may be used as long as it is a fiber a fiber fusible by heat to bond mutually. However, the melting point ($Tm_B$) of a sheath component as a low-melting component of a sheath-core type composite fiber as a heat-adhesive component or a low-melting component of a side-by-side type composite fiber is required to be 130 to 200°C. It is preferably from 140 to 180°C. Further, as the high-melting synthetic fiber (C) mixed therewith, any fiber may be used as long as it has a melting point of 200°C or higher. However, a polyester-based fiber is particularly preferred because of its higher specific gravity than water, excellent performance and the like. The melting point of the high-melting synthetic fiber (C) is preferably from 210 to 280°C.

The mixing ratio of the heat-adhesive composite fiber (B) and the high-melting synthetic fiber (C) is preferably from 80/20% by weight to 30/70% by weight. When the ratio of the high-melting synthetic fiber (C) is less than 20% by weight, adhesion to a sealing bar of a heat-sealing bag-making machine becomes easy to occur with time, because of the small difference in melting point between front and back sides. In particular, when some kind of machine trouble occurs to cause a standstill of the machine, adhesion to the sealing bar results in the difficulty of bag-making processing, which tends to cause a decrease in production efficiency. On the other hand, when the ratio of the high-melting synthetic fiber (C) exceeds 70% by weight, risk of fiber falling-off occurs, and there is a fear that fibers fallen off from the sheet comes to be mixed in an food extract. More preferably, the mixing ratio is from 70/30 to 35/65% by weight.

The melting point $Tm_A$ of the sheath component as the low-melting component of the sheath-core type composite fiber of the heat-adhesive composite fiber (A) which forms the fiber web (1) or the low-melting component of the side-by-side type composite fiber and the melting point $Tm_B$ of the sheath component as the low-melting component of the heat-adhesive composite fiber (B) which forms the high-melting fiber web (2) or the low-melting component of the side-by-side type composite fiber are required to satisfy the following equation (1);

$$Tm_A \leq Tm_B \quad \cdots\cdots \quad (1)$$

When $Tm_A$ is higher than $Tm_B$, the difference in melting point between front and back sides is reversed, resulting in a failure to correspond to heat-sealing suitability intended by the present invention. Even when $Tm_A = Tm_B$, necessary heat-sealing suitability is exhibited, because the high-melting synthetic fiber (C) is further mixed in the layer of $Tm_B$.

The sheet (2) for food extraction of the present invention exhibits excellent heat-sealing properties by providing such a difference in melting point.

The constitution of the heat-adhesive composite fiber (B) constituting the high-melting fiber web (2) of the sheet (2) for food extraction of the present invention has the same constitution as that of the above-mentioned heat-adhesive composite fiber (A). The heat-adhesive composite fibers (A) and (B) and the high-melting synthetic fiber (C) are preferably a polyester-based component.

The fiber length of these heat-adhesive composite fiber (B) and high-melting synthetic fiber (C) is also the same as that of the above-mentioned heat-adhesive composite fiber (A).

The fineness of the heat-adhesive composite fiber (B) is from 1.0 to 4.5 dt, and preferably from 1.5 to 3.5 dt. The fineness of the high-melting synthetic fiber (C) is from 0.5 to 7.0 dt, and preferably from 0.6 to 4.5 dt. When the fineness of the heat-adhesive composite fiber (B) is less than 1.0 dt or the fineness of the high-melting synthetic fiber (C) is less than 0.5 dt, the fibers come close to one another, which causes not only deterioration of extraction properties through minute pores formed among the fibers, but also a tendency of inducing clogging. Further, unopened or undispersed fibers increase to cause a tendency of deteriorating nonwoven fabric texture. On the other hand, when the fineness of the heat-adhesive composite fiber (B) exceeds 4.5 dt or the fineness of the high-melting synthetic fiber (C) exceeds 7.0 dt, extraction speed increases, but a fine green tea powder or food powder becomes easy to leak, resulting in unsuitability for this use.

In addition, these fibers may be either crimped or not, or may be strand chops. When crimped, both of a zigzag-shaped two-dimensionally crimped fiber and a spiral-shaped or ohm-shaped three-dimensionally (sterically) crimped fiber can be used.

In the above-mentioned sheet (2) for food extraction, it is preferred that the fiber web (1) is composed of 100% heat-adhesive composite fiber (A), and that the fiber web (2) is composed of 100% heat-adhesive composite fiber (B) and high-melting synthetic fiber (C), in terms of an increase in strength and prevention of fiber falling-off. However, similarly to the sheet (1) for food extraction, a fiber other than these fibers, for example, PP fiber, PET fiber, PBT fiber, 6-nylon fiber, 66-nylon fiber, aromatic polyamide fiber, acrylic fiber, synthetic pulp, wood pulp, hemp, cotton, rayon, molten viscose fiber or the like, may be mixed therewith within the range not impairing the spirit and effect of the present invention. In this case, it is preferred that the ratio of the other fiber is confined to 10% by weight or less. Exceeding 10% by weight results in not only an influence on nonwoven fabric strength or heat-sealing properties, but also easy falling-off of fibers having no heat adhesiveness in practical use.

The basis weight of both the fiber web (1) and fiber web (2) constituting the sheet (2) for food extraction is preferably from 2 to 30 g/m$^2$, and more preferably from 5 to 25 g/m$^2$. When the basis weight of these fibers is less than 2 g/m$^2$, the fiber amount is too small to carry out the function of each layer. On the other hand, when the basis weight exceeds 30 g/m$^2$, the fibers are too closely spaced, resulting in deterioration of extraction properties.

The sheet (2) for food extraction comprises at least two fiber web layers. When two or more layers are laminated, the fiber web (1) or (2) may be arranged in an inner-layer portion. In this case, the layers may be different from one another in the fineness, the melting point of the low-melting component, the kind of fiber and the basis weight, as long as they are within the requirements of the fiber web (1) or (2). However, as the sheet for food extraction of the present invention, the basis weight of the whole sheet is required to be from 10 to 50 g/m$^2$, and preferably from 15 to 40 g/m$^2$.

## Sheet (3) for Food Extraction

The sheet (3) for food extraction is a composite air-laid sheet for food extraction having a basis weight of 10 to 50 g/m$^2$ which is produced by forming the above-mentioned fiber web (1) by an air-laid process on one side of a wet nonwoven fabric comprising pulp and the above-mentioned heat-adhesive composite fiber (A) mixed at a ratio of 97/3% to 70/30% by weight and having a basis weight of 2 to 30 g/m$^2$ and an air permeability of 1.5 seconds or less, and laminating and integrating them.

## Substrate Layer Used for Formation of Air-Laid Fiber Layer

In the sheet (3) for food extraction of the present invention, the wet nonwoven fabric comprising pulp and the above-mentioned heat-adhesive composite fiber (A) mixed at a ratio of 97/3% to 70/30% by weight and having a basis weight of 2 to 30 g/m$^2$ and an air permeability of 1.5 seconds or less is used as a substrate, and the fiber web (1) is formed on one side thereof by the air-laid nonwoven fabric production process.

In this substrate, a small amount of the heat-adhesive composite fiber (A) is preferably mixed in wood pulp, in terms of effects of improving fabric strength, adhesion to the air-laid fiber layer and integration, water resistance and the like. The mixing ratio is from 97/3 to 70/30% by weight, and preferably from 95/5 to 80/20% by weight.

The higher the ratio of the heat-adhesive composite fiber (A) is, the larger the above-mentioned effects become. However, when it exceeds 30% by weight, heat adhesion to a heat-sealing bar or a hot pate occurs, resulting in a failure to play an original role as a non-heat-sealing surface. Adversely, in the case of less than 3% by weight, the above-mentioned effects can not be expected.

As the pulp used in the sheet (3) for food extraction, wood pulp, cotton linter pulp or the like can be used.

The basis weight of the wet nonwoven fabric as the substrate is from 2 to 30 g/m$^2$, and preferably from 5 to 25 g/m$^2$. In the case of less than 2 g/m$^2$, productivity as the wet nonwoven fabric significantly decreases to become unfit to industrial production, resulting in high cost. This is therefore unsuitable to marketability of this use. On the other hand, exceeding 30 g/m$^2$ results in not only a tendency of failing to secure the requirement of an air permeability of 1.5 seconds or less which is necessary as the substrate of the air-laid process, but also a decrease in food extraction performance intended in the present invention.

Further, the air permeability is required to be 1.5 seconds or less. The air-laid process is a process in which a mixture of fibers and air is blasted from an upper portion over an air-permeable material to form a fiber layer on the air-permeable material while sucking with a suction from an under portion thereof. Accordingly, the air permeability of the wet nonwoven fabric used as the substrate not only becomes an important requirement, but also has an influence on extraction performance as the food extraction sheet. In the case of a poor air-permeability exceeding 1.5 seconds, the air-laid fiber layer is liable to become uneven, and productivity also deteriorates. Moreover, clogging tends to easily occur as the extraction sheet, so that not only extraction speed decreases, but also extraction concentration is liable to become low. The air permeability is preferably from 05 to 1.5 seconds.

Formation of Fiber Layer by Air-Laid Nonwoven Fabric production Process, and Lamination and Integration

Then, the fiber web (1) is formed on the wet nonwoven fabric as the above-mentioned substrate by the air-laid process. That is to say, similarly to the above-mentioned sheets (1) and (2) for food extraction, heat-adhesive composite fibers (A) are blasted from a single blast portion or multiple blast portions positioned over a porous net conveyer to form the fiber web (1) on the net conveyer while sucking with an air suction portion arranged under the net conveyer. At this time, the wet nonwoven fabric as the above-mentioned substrate is previously laid on the net conveyor, thereby obtaining a laminated body at once. Then, interfiber bonds of the air-laid layer and heat adhesion to the substrate layer are formed by hot air treatment and/or hot pressing calendering treatment to achieve integration as a nonwoven fabric. Necessary characteristics can be controlled by adjusting the fiber amount, blasting conditions, air suction conditions, heat treatment conditions and the like.

Further, in the above-mentioned sheet (3) for food extraction, it is preferred that the fiber web (1) is composed of 100% heat-adhesive composite fiber (A), in terms of an increase in strength and prevention of fiber falling-off. However, a fiber other than the heat-adhesive composite fiber (A), for example, PP fiber, PET fiber, PBT fiber, nylon 6 fiber, nylon 6,6 fiber, aromatic polyamide fiber, acrylic fiber, synthetic pulp (for example, fibrillated fiber using PE or PP as a raw material, such as SWP manufactured by Mitsui Chemicals, Inc.), wood pulp, hemp, cotton, rayon, viscose fiber or the like, may be mixed therewith within the range not impairing the spirit and effect of the present invention. In this case, it is preferred that the ratio of the other fiber is confined to less than 20% by weight. When the ratio is 20% by weight or more, not only it exerts an influence on nonwoven fabric strength or heat-sealing properties, but also fibers having no heat adhesiveness easily fall off in practical use.

The basis weight of the fiber web (1) formed by the air-laid process is from 2 to 30 g/m$^2$, and preferably from 5 to 25 g/m$^2$. In the case of less than 2 g/m$^2$, nonwoven fabric strength and heat-sealing strength decrease to result in unsuitability for practical use. On the other hand, exceeding 30 g/m$^2$ results in deterioration of extraction performance because of excessive thickness.

According to the air-laid nonwoven fabric production process using the fibers as described above, as a raw material, fibers short in length can be used, compared to an existing dry nonwoven fabric production process such as a card process. The fibers are therefore easily dissociated to single fibers by airflow. Accordingly, the air-laid process has an outstanding characteristic that there is obtained a nonwoven fabric having extremely good texture, namely having good uniformity. In use for food extraction, performance of being small in powder leakage and good in extraction properties is an important characteristic, and is hard to be obtained by an existing card process nonwoven fabric, spun bond nonwoven fabric and melt blow nonwoven fabric. Further, according to this production method, the nonwoven fabric also has a merit that the longitudinal/lateral strength ratio is approximately close to 1/1.
Furthermore, no paper-making agent and no chemical binder are used, so that not only safety is high as a sheet for food, but also there is no fear of environmental contamination at the time of production or disposal.

Hot Air Treatment

As for the hot air treatment for forming interfiber bonds in the above-mentioned sheets (1) and (3) for food extraction, there is necessary a temperature equal to or higher than the melting point of the low-melting component of the heat-adhesive composite fiber (the sheath component of the sheath-core type composite fiber or the component on the low-melting side of the side-by-side type composite fiber). However, when the temperature is higher than the melting point of the low-melting component by 30˚C or higher, or equal to or higher than the melting point of the high-melting component (the core component of the sheath-core type composite fiber or the high-melting component of the side-by-side type composite fiber), thermal shrinkage of the fiber is liable to become large, which causes deterioration of texture, and deterioration of the fiber in an extreme case. This is therefore unfavorable. Accordingly, the hot air treatment temperature is usually from 110 to 200˚C, preferably from 120 to 180˚C, and more preferably from 130 to 170˚C.
Further, in the above-mentioned sheet (2) for food extraction, a temperature equal to or higher than the melting point $Tm_B$ of the low-melting component of the heat-adhesive composite synthetic fiber (B) constituting the high-melting layer (fiber web (2)) is particularly required for the hot air treatment. However, when the temperature is higher than $Tm_B$ by a temperature exceeding 30˚C, or equal to or higher than the melting point of the high-melting component, thermal shrinkage of the fiber is liable to become large, which causes deterioration of texture. This is therefore unfavorable. Accordingly, the hot air treatment temperature of the sheet (2) for food extraction is usually from 130 to 200˚C, and preferably from 145 to 180˚C.

Hot Pressing Treatment

Further, in the present invention, the hot pressing treatment can also be used. The hot pressing treatment is conducted depending on performance as the sheet for food extraction or the thickness desired, and calendering treatment is generally used. The calendering treatment may be conducted after the hot air treatment, or only the hot air treatment or only the calendering treatment may be conducted. Simultaneous use of both is preferred because an increase in strength can be most expected. As rollers used for the calendering treatment, a pair of metal rollers having a smooth surface or a combination of a metal roller and an elastic roller is preferably used, in order to apply uniform hot pressing over all. However, multistage rollers may be used. Furthermore, embossed rollers having an uneven surface may also be used within the range not impairing the spirit of the present invention.

The temperature at which the sheet (1) for food extraction is heat-adhered by the calendering treatment is appropriately selected depending on the kind of heat-adhesive composite fiber used or the basis weight of the whole. However, when the hot air treatment has previously been conducted, the hot pressing treatment plays a role of thickness adjustment, and the temperature can be arbitrarily set within the range of ordinary temperature to the melting point of the low-melting component. In the case of a high temperature close to the melting point of the low-melting component, the nonwoven fabric strength increases, but clogging occurs to cause deterioration of extraction properties. On the other hand, in the case of a temperature close to ordinary temperature, the hot pressing treatment only plays a role of thickness adjustment. When the hot air treatment has not previously been conducted, it is suitable that the temperature is within the range of the melting point of the low melting component to the melting point minus 30°C. In order to increase the strength, a temperature as high as possible is preferred. However, exceeding the melting point unfavorably results in a tendency of the occurrence of adhesion to the roller surface. In the case of less than the melting point minus 30°C, the nonwoven fabric strength is impractically low, even when the roller pressure is increased. The temperature is preferably from 80 to 170°C, and more preferably from 100 to 150°C.

The temperature of the roller which comes into contact with the fiber web (1) at which the sheet (2) for food extraction previously subjected to the hot air treatment is heat-adhered by the calendering treatment requires relatively lower temperature, because the heat-adhesive composite fibers (A) have already previously been heat-bonded to one another by the hot air treatment, and can be appropriately selected depending on the kind of fiber, the melting point of the low-melting component, the basis weight of the whole and the like. The temperature can be set to any temperature from the melting point $Tm_A$ of the low-melting component of the heat-adhesive composite fiber (A) to ordinary temperature. When the temperature is closer to $Tm_A$, an increase in strength can be expected, but clogging occurs to cause deterioration of extraction properties. Exceeding $Tm_A$ causes risk of the occurrence of adhesion to the roller surface. In the case of a temperature close to ordinary temperature, the hot pressing treatment only plays a role of thickness adjustment. The temperature of the roller in contact with the high-melting fiber web (2) is preferably within the range of the melting point $Tm_B$ of the low-melting component of the heat-adhesive composite fiber (B) plus 20°C to minus 30°C. Exceeding $Tm_B$ plus 20°C causes risk of the occurrence of adhesion to the roller surface, whereas less than $Tm_B$ minus 30°C results in a tendency of insufficient fixing of the high-melting synthetic fiber (C) by the heat-adhesive composite fiber (B), which unfavorably increases risk of fiber falling-off. More preferably, the temperature is from $Tm_B$ plus 15°C to minus 20°C. In order to optimize and stabilize performance such as strength and extraction properties as the sheet for food extraction, it is preferred that the sheet previously subjected to the hot air treatment is further treated by the calendering treatment. As for calendering treatment conditions in the case where the hot air treatment has not previously been conducted, the temperature of the roller which comes into contact with the fiber web (1) is suitably within the range of the melting point $Tm_A$ of the low-melting component of the heat-adhesive composite fiber (A) to $Tm_A$ minus 30°C, and the temperature of the roller which comes into contact with the high-melting fiber web (2) is preferably within the range of the melting point $Tm_B$ of the low-melting component of the heat-adhesive composite fiber (B) plus 20°C to minus 30°C. In order to increase the strength, a temperature as high as possible is preferred. However, exceeding the melting point unfavorably results in a tendency of the occurrence of adhesion to the roller surface. On the other hand, in the case of less than the melting point minus 30°C, the nonwoven fabric strength is impractically low, even when the roller pressure is increased.

It is suitable that the sheet (3) for food extraction is previously subjected to the hot air treatment, and thereafter, further treated by the calendering treatment. As for the calender roller temperatures, the surface temperature of the roller which comes into contact with a surface of the fiber web (1) (used as a heat-sealing layer in bag-making) is required to be different from the surface temperature of the roller which comes into contact with the wet nonwoven fabric (non-heat-- sealing layer).

The surface temperature of the roller which comes into contact with a surface of the fiber web (1) requires relatively lower temperature, because the heat-adhesive composite fibers (A) have already previously been heat-bonded to one another by the hot air treatment, and can be appropriately selected depending on the kind of fiber, the melting point, the basis weight of the whole and the like. The surface temperature can be set to any temperature from the melting point of the low-melting component to the melting point minus 50°C. When the surface temperature is a high temperature close to the melting point, the nonwoven fabric strength or interlayer strength tends to further increase, but clogging tends to occur to cause deterioration of extraction properties. On the other hand, in the case of a temperature close to the melting point minus 50°C, an effect of increasing the strength decreases, but a role of thickness adjustment is played. Exceeding the melting point unfavorably results in the easy occurrence of adhesion to the roller surface. In the case of less than the melting point minus 50°C, the nonwoven fabric strength is impractically low, even when the roller pressure is increased. The temperature is preferably from 70 to 170˚C.

The temperature of the roller which comes into contact with a surface of the wet nonwoven fabric is suitably from the melting point of the low-melting component of the heat-adhesive composite fiber (A) to the melting point plus 50˚C. Less than the melting point results in a tendency of insufficient heat adhesion and integration between front and back layers, whereas exceeding the melting point plus 50˚C results in risk of the occurrence of adhesion to the roller to cause lacking in productivity. The temperature is preferably from 110 to 200˚C.

Further, as the line pressure of the calendering treatment, any pressure can be selected, as long as it is set so that a uniform line pressure is obtained in the width direction. In the case of high pressure, the nonwoven fabric strength increases, the thickness decreases, and clogging occurs to cause deterioration of extraction properties. In the case of low pressure, influences opposite thereto are of course exerted. In the case of no hot air treatment and only the hot pressing treatment, a pressure as high as possible is preferred in terms of the nonwoven fabric strength. Usually, the pressure is preferably from 10 to 100 kgf/cm.

The basis weight of the resulting sheets (1) to (3) for food extraction of the present invention is from 10 to 50 $g/m^2$, and preferably from 15 to 40 $g/m^2$. When the basis weight is less than 10 $g/m^2$, the strength is too weak, which poses a practical problem. On the other hand, when it exceeds 50 $g/m^2$, the fibers are too closely spaced, resulting in deterioration of extraction properties.

In addition, the thickness of the resulting sheets (1) to (3) for food extraction of the present invention is usually from 0.05 to 1.5 mm, and preferably from 0.07 to 1.2 mm. Less than 0.05 mm results in high density to cause deterioration of extraction properties, whereas exceeding 1.5 mm results in excessive bulkiness to cause risk of interlayer separation.

Examples

The present invention will be described in more detail with reference to the following examples, but should not be construed as being limited thereto.

Preparation of Sheet (1) for Food Extraction

<Example 1>

A heat-adhesive composite fiber composed of a core of polyethylene terephthalate (PET) and a sheath of an isophthalic acid copolyester having a melting point of 150˚C (manufactured by Teijin Fibers Ltd., fineness: 2.2 dt, length: 5mm) was used as a raw material fiber, sent while mixing with a large amount of air flow by an air blower, and blasted on a net while exhausting the air with a suction from an under portion of the net, thereby collecting the fiber in a web form. Then, this web obtained by the air-laid process was heated in a hot oven of 152˚C for 2 minutes, and thereafter, subjected to calender finishing using a pair of metal rollers having a temperature of 147˚C and a line pressure of 20 kgf/cm. The resulting air-laid nonwoven fabric was a sheet having high uniformity and good texture, and no separation of a heat-sealed portion occurred even when it was extracted in hot water. Thus, this sheet had good practical utility as a sheet for food extraction.

<Example 2>

A heat-adhesive composite fiber composed of a core of PET and a sheath of high-density polyethylene having a melting point of 135˚C (manufactured by Teijin Fibers Ltd., fineness: 2.2 dt, length: 5 mm) was used as a raw material fiber, sent while mixing with a large amount of air flow by an air blower in the same manner as in Example 1, and blasted on a net while exhausting the air with a suction from an under portion of the net, thereby collecting the fiber in a web form. Then, this web obtained by the air-laid process was heated in a hot oven of 140˚C for 2 minutes, and thereafter, subjected to calender finishing using a pair of metal rollers having a temperature of 120˚C and a line pressure of 15 kgf/cm. The resulting air-laid nonwoven fabric was a sheet having high uniformity and good texture, and no separation of a heat-sealed portion occurred even when it was extracted in hot water. Thus, this sheet had good practical utility as a sheet for food extraction.

<Comparative Example 1>

A heat-adhesive composite fiber composed of a core of PET and a sheath of an isophthalic acid copolyester having a melting point of 110˚C (manufactured by Teijin Fibers Ltd., fineness: 1.7 dt, length: 3 mm) was used as a raw material fiber, sent while mixing with a large amount of air flow by an air blower in the same manner as in Example 1, and blasted on a net while exhausting the air with a suction from an under portion of the net, thereby collecting the fiber in a web form. Then, this web obtained by the air-laid process was heated in a hot oven of 144˚C for 2 minutes, and thereafter, subjected to calender finishing using a pair of metal rollers having a temperature of 105˚C and a line pressure of 20 kgf/cm. The melting point of the sheath portion of the fiber was as close to the boiling point of water as 110˚C, so that when a bag made of the resulting air-laid nonwoven fabric by a heat-sealing process was immersed in boiling water for 3 minutes, a heat-sealed portion was separated.

<Comparative Example 2>

A heat-adhesive composite fiber composed of a core of polypropylene (PP) and a sheath of high-density polyethylene having a melting point of 130˚C (manufactured by Chisso Corp. , fineness: 3.3 dt, length: 51 mm) was opened and formed into a web with a carding machine as a raw material fiber. The resulting card web was fed between a pair of metal rollers having a temperature of 133˚C and a line pressure of 40 kgf/cm with a conveyer to perform calender finishing. The resulting dry nonwoven fabric was poor in texture, compared to Examples, and the use thereof as a bag for powdered green tea of middle grade resulted in much powder leakage to cause a cloudy extract, which practically posed a problem.

The results of Examples 1 and 2 and Comparative Examples 1 and 2 are shown in Table 1.

[Table 1]

| | | Example 1 | Example 2 | Comparative Example 1 | Comparative Example 2 |
|---|---|---|---|---|---|
| Nonwoven Fabric Production Process | | Air-Laid Process | Air-Laid Process | Air-Laid Process | Card Process |
| Law Material Fiber (Core/Sheath) (Melting Point of Sheath Component) (Fineness × Length) | | PET/Co.PET 150˚C 2.2 dt×5 mm | PET/PE 130˚C 2.2 dt×5 mm | PET/Co.PET 110˚C 1.7 dt×3 mm | PP/PE 130˚C 3.3 dt×51 mm |
| Heat Treatment | Hot Air Oven | 152˚C | 140˚C | 144˚C | - |
| | Hot Pressure Calender | 147˚C | 120˚C | 105˚C | 133˚C |
| Basis Weight [g/m$^2$] | | 18.3 | 18.4 | 17.8 | 19.8 |
| Thickness [mm] | | 0.11 | 0.33 | 0.13 | 0.35 |
| Dry Tensile Strength [kgf/25 mm] | MD | 1.28 | 1.00 | 0.86 | 3.51 |
| | CD | 1.02 | 0.91 | 0.77 | 0.73 |
| Wet Tensile Strength [kgf/25 mm] | MD | 1.22 | 0.95 | 0.83 | 3.26 |
| | CD | 1.06 | 0.82 | 0.79 | 0.67 |
| Heat-Sealing Strength [kgf/25 mm] | Dry | 1.23 | 0.87 | 0.75 | 1.39 |
| | Wet | 1.14 | 0.74 | 0.64 | 1.45 |
| Texture | | ◎ | ◎ | ◎ | x |
| Air Permeability [cc/cm$^2$·sec] | | 387 | 303 | 199 | 224 |
| Freeness [sec/500 cc] | | 18 | 27 | 15 | 17 |
| Extraction Properties of Tea | Concentration | ◎ | ◎ | O | ◎ |
| | Powder Leakage | ◎ | ◎ | ◎ | x |
| Stability of Sealed portion in Hot Water | | ◎ | ○ | × | Δ |

Preparation of Sheet (2) for Food Extraction

<Example 3>

A heat-adhesive composite fiber composed of a core of PET and a sheath of high-density polyethylene having a melting point of 130˚C (fineness: 2.2 dt, length: 5 mm, manufactured by Teij in Fibers Ltd.) was used as a raw material fiber, sent while mixing with a large amount of air flow by an air blower, and blasted on a net while exhausting the air with a suction from an under portion of the net, thereby collecting the fiber as a low-melting web (fiber web (1)) having a basis weight of 10 g/m$^2$. Then, on this web, a mixture in which a heat-adhesive composite fiber composed of a core of PET and a sheath of an isophthalic acid copolyester having a melting point of 150˚C (fineness: 2.2 dt, length: 5 mm, manufactured by Teijin Fibers Ltd.) and PET fiber having a melting point of 250˚C (1.7 dt, length: 5 mm, manufactured by Teijin Fibers Ltd.) were mixed at a ratio of 50/50% by weight was similarly laminated and collected as a high-melting web (fiber web (2)) having a basis weight of 8 g/m$^2$. This laminated web was heated in a hot air oven of 50˚C for 2 minutes, and thereafter, subjected to calender finishing using a pair of metal rollers having a low-melting web side temperature of 115˚C, a high-melting web side temperature of 155˚C and a line pressure of 20 kgf/cm. The resulting layered composite air-laid nonwoven fabric was a sheet having high uniformity and good texture, no adhesion trouble to a sealing bar of a heat-sealing bag-making processing machine occurred, tea extraction performance was good, and no separation of a heat-sealed portion occurred even in hot water. Thus, this sheet had good practical utility as a sheet for food extraction.

<Example 4>

A heat-adhesive composite fiber composed of a core of PET and a sheath of an isophthalic acid copolyester having a melting point of 150˚C (fineness: 1.7 dt, length: 5 mm, manufactured by Teijin Fibers Ltd.) was used as a raw material fiber, and collected on a net as a low-melting web (fiber web (1)) having a basis weight of 8 g/m$^2$ in the same manner as in Example 1.

Then, on this web, a mixture in which a heat-adhesive composite fiber composed of a core of PET and a sheath of an isophthalic acid copolyester having a melting point of 150˚C (fineness: 2.2 dt, length: 5mm, manufactured by Teijin Fibers Ltd.) and PET fiber having a melting point of 250˚C (2.2 dt, length: 5 mm) were mixed at a ratio of 60/40% by weight was similarly laminated and collected as a high-melting web (fiber web (2)) having a basis weight of 10 g/m$^2$. This laminated web was heated in a hot air oven of 155˚C for 2 minutes, and thereafter, subjected to calender finishing using a pair of metal rollers having a low-melting web side temperature of 125˚C, a high-melting web side temperature of 160˚C and a line pressure of 20 kgf/cm. The resulting layered composite air-laid nonwoven fabric was a sheet having high uniformity and good texture similarly to Example 1, no adhesion trouble to a sealing bar of a heat-sealing bag-making processing machine occurred, tea extraction performance was good, and no separation of a heat-sealed portion occurred even in hot water. Thus, this sheet had good practical utility as a sheet for food extraction.

<Comparative Example 3>

A heat-adhesive composite fiber composed of a core of polypropylene (PP) and a sheath of high-density polyethylene having a melting point of 130˚C (fineness: 3.3 dt, length: 51 mm, manufactured by Chisso Corp.) was opened and formed into a web with a carding machine as a raw material fiber. The resulting card web was fed between a pair of metal rollers having a temperature of 133˚C and a line pressure of 40 kgf/cm with a conveyer to perform calender finishing. The resulting dry nonwoven fabric tended to adhere to a surface of a heat-sealing bar of a bag-making processing machine, and particularly, was firmly fixed to a sealing portion in some cases, when the machine came to a standstill. Further, it was poor in texture, compared to Examples 3 and 4, and the use thereof as a bag for powdered green tea of middle grade resulted in much powder leakage to cause a very cloudy extract, which practically posed a problem.

The results of Examples 3 and 4 and Comparative Example 3 are shown in Table 2.

[Table 2]

|  | Example 3 | Example 4 | Comparative Example 3 |
|---|---|---|---|
| Nonwoven Fabric Production Process | Air-Laid Process | Air-Laid Process | Card Process |

(continued)

| | | | Example 3 | Example 4 | Comparative Example 3 |
|---|---|---|---|---|---|
| Raw Material Fiber | Low-Melting Fiber Web (1) | Heat-Adhesive Composite Fiber A (Core/ Sheath) (Fineness × Length) | PET/PE 2.2dt×5mm | PET/Co.PET 1.7dt×5mm | PP/PE 3.3dt×51mm Melting Point of Sheath Component: 130˚C |
| | | Melting Point $Tm_A$ of Sheath Component | 130˚C | 150˚C | |
| | | Set Basis Weight [g/m$^2$] | 10 | 8 | |
| | High-Melting Fiber Web (2) | Heat-Adhesive Composite Fiber B (Core/ Sheath) (Fineness × Length) | PET/Co.PET 2.2dt×5mm | PET/Co.PET 2.2dt×5mm | |
| | | Melting Point $Tm_B$ of Sheath Component | 150˚C | 150˚C | |
| | | High-melting Synthetic Fiber C | PET 1.7dt×5 (Melting Point (Tmc) 250˚C) | PET 2.2dt×5 (Melting Point (Tmc) 250˚C) | |
| | | B/C Mixing Ratio [wt%] | 50/50 | 60/40 | |
| | | Set Basis Weight [g/m$^2$] | 8 | 10 | |
| Heat Treatment | Hot Air Oven | | 150˚C | 155˚C | |
| | Hot Pressure Calender | Low-Melting Web (1) Side | 115˚C | 125˚C | 133˚C |
| | | High-Melting Web (2) Side | 155˚C | 160˚C | |
| Measured Basis Weight [g/m$^2$] | | | 18.3 | 18.4 | 17.8 |
| Thickness [mm] | | | 0.09 | 0.08 | 0.07 |
| Dry Tensile Strength [kgf/25 mm] | MD | | 0.84 | 1.12 | 3.11 |
| | CD | | 0.74 | 0.97 | 0.73 |
| Wet Tensile Strength [kgf/25 mm] | MD | | 0.66 | 0.93 | 3.09 |
| | CD | | 0.67 | 0.83 | 066 |
| Heat-Sealing Strength [kgf/25 mm] | Dry | | 0.70 | 0.88 | 1.02 |
| | Wet | | 0.75 | 0.82 | 0.94 |
| Texture | | | ◎ | ◎ | × |
| Air Permeability [cc/cm$^2$·sec] | | | 250 | 244 | 334 |
| Freeness [sec/500 cc] | | | 18 | 23 | 11 |

(continued)

|  | | Example 3 | Example 4 | Comparative Example 3 |
|---|---|---|---|---|
| Extraction Properties of Tea | Concentration | ◎ | ◎ | ◎ |
|  | Powder Leakage | ◎ | ◎ | × |
| Stability of Sealed portion in Hot Water | | ◎ | ◎ | Δ |
| Heat-Sealing Processability (Adhesiveness to Sealing Bar) | | No adhesion | No adhesion | Adhered to a sealing bar |

Preparation of Sheet (3) for Food Extraction

<Example 5>

A heat-adhesive composite fiber composed of a core of PET and a sheath of an isophthalic acid copolyester having a melting point of 150˚C (manufactured by Teijin Fibers Ltd., fineness: 2.2 dt, length: 5 mm) was sent while mixing it with a large amount of air flow by an air blower, and blasted from a blast portion positioned over a porous net conveyer together with the air flow. At this time, a wet nonwoven fabric with a basis weight of 13 g/m$^2$ comprising 8% by weight of a heat-adhesive composite fiber composed of a core of PET and a sheath of an isophthalic acid copolyester having a melting point of 150˚C (manufactured by Teijin Fibers Ltd., fineness: 2.2 dt, length: 5 mn) and 92% by weight of wood pulp (Aiabama Pine) was previously placed on the net as a raw material fiber, and the heat-adhesive composite fiber sent was collected as a low-melting composite fiber layer (fiber web (1)) having a basis weight of 7 g/m$^2$ while sucking with an air suction portion arranged under the wet nonwoven fabric and the net conveyer.
Then, the laminated web of the wet nonwoven fabric and the low-melting composite fiber layer was heated in a hot air oven of 152˚C for 2 minutes, and thereafter, subjected to calender finishing using a pair of metal rollers. The calender temperature on the low-melting composite fiber side was 115˚C, the calender temperature on the wet nonwoven fabric side was 155˚C, and the line pressure was 35 kgf/cm. The resulting layered composite air-laid nonwoven fabric was a sheet having high uniformity, good texture and the difference in melting point between front and back sides, no adhesion trouble to a sealing bar of a heat-sealing bag-making processing machine occurred, tea extraction performance was good, and no separation of a heat-sealed portion occurred even in hot water. Thus, this sheet was excellent as a sheet for food extraction, and had good practical utility.

<Comparative Example 4>

A heat-adhesive composite fiber composed of a core of PP and a sheath of high-density polyethylene having a melting point of 130˚C (fineness: 3.3 dt, length: 51 mm) was opened and formed into a web with a carding machine as a raw material fiber. The resulting card web was fed between a pair of metal rollers having a temperature of 133˚C and a line pressure of 40 kgf/cm with a conveyer to perform calender finishing. The resulting dry nonwoven fabric tended to adhere to a surface of a heat-sealing bar of a bag-making processing machine, and particularly, was firmly fixed to a sealing portion in some cases, when the machine came to a standstill. Further, it was poor in texture, compared to Example 5, and the use thereof as a bag for powdered green tea of middle grade resulted in much powder leakage to cause a very cloudy extract, which practically posed a problem.
The results of Example 5 and Comparative Example 4 are shown in Table 3.
[Table 3]

| | | | Example 5 | Comparative Example 4 |
|---|---|---|---|---|
| Heat-Sealing Layer (Fiber Web (1)) | Production Process | | Air-Laid Process | Production Process; Card Process |
| | Heat-Adhesive Composite Fiber A | | PET/Co.PET 2.2dt×5mm | |
| | Melting Point $Tm_A$ of Sheath Component | | 150˚C | |
| | Basis Weight [g/m²] | | 7 | Raw Material Fiber; PET/PE 3.3dt× 51mm |
| Non-Heat-Sealing Layer (Wet Nonwoven Fabric) | Production Process | | Wet Paper Making | |
| | Heat-Adhesive Composite Fiber A | | PET/Co.PET 2.2dt×5mm | |
| | Melting Point of Sheath Component | | 150˚C | |
| | Pulp/(A) Ratio (%) | | 92/8 | |
| | Basis Weight [g/m²] | | 13 | |
| | Air Permeability [sec] | | 0.9 | |
| Heat Treatment | Hot Air Oven | | 152˚C | - |
| | Hot Pressure Calender | Non-Heat-Sealing Side | 155˚C | 133˚C |
| | | Heat-Sealing Side | 115˚C | |
| Basis Weight of the Whole [g/m²] | | | 20 | 18 |
| Thickness [mm] | | | 0.15 | 007 |
| Dry Tensile Strength [kgf/25 mm] | | MD | 0.74 | 3.01 |
| | | CD | 0.68 | 0.69 |
| Wet Tensile Strength [kgf/25 mm] | | MD | 0.60 | 3.01 |
| | | CD | 0.55 | 0.60 |
| Heat-Sealing Strength [kgf/25 mm] | | Dry | 0.66 | 1.05 |
| | | Wet | 0.62 | 0.87 |
| Texture | | | ◎ | × |
| Air Permeability [cc/cm²·sec] | | | 112 | 355 |
| Freeness [sec/500 cc] | | | 26 | 11 |
| Extraction Properties of Tea | | Concentration | ◎ | ◎ |
| | | Powder Leakage | ◎ | × |
| Stability of Sealed Portion in Hot Water | | | ◎ | Δ |
| Heat-Sealing Processability (Adhesiveness to Sealing Bar) | | | No adhesion | Adhered in Stand-still |

The respective measurements were made by the following methods:

Dry Tensile Strength:

As for a measuring method, the sample size was 25 mm in width, and the measurement was made at a distance between chucks of 100 mm and a stretching speed of 300 mm/min. MD indicates a longitudinal direction, and CD indicates a width direction, hereinafter the same.

Wet Tensile Strength:

After immersed in water of 25˚C for 3 minutes, a sample was allowed to stand on a wire mesh for 5 minutes, and then, the strength was measured in the same manner as with the dry tensile strength.

Heat-Sealing Strength:

Samples having a width of 25 mm were cut out in an MD direction, and two samples were laminated and heat-sealed at a seal width of 1.5 mm in a CD direction. The heat sealing was performed by using an NL-301J Impulse Sealer manufactured by Ishizaki Denki Seisakusho Co. , Ltd. The sealing was performed at scale 4 in Examples 1 and 2 and Comparative Examples 1 and 2, at scale 5 in Examples 3 and 4 and Comparative Example 3, and at scale 6 in Example 5 and Comparative Example 4.
Then, both ends of this sealed sample were held with shucks so as to give a distance between the chucks of 100 mm, and the heat-sealing strength was measured at a stretching speed of 100 mm/min. In addition, the wet heat-sealing strength was measured in the same manner as with the above-mentioned wet tensile strength.

Texture

The texture was judged with the naked eye. A state in which much unevenness was observed was taken as ◎, and a state in which little unevenness was observed was taken as ×.

Air Permeability

The air permeability was measured in accordance with a JIS L1096A method (Frajour method).

Freeness

The freeness was measured in accordance with JIS P3801 (Hertzberch filtration rate test method), provided that the amount of water was 500 cc.

Extraction Properties of Tea

A bag 5 cm long/wide containing 10 g of powdered green tea of middle grade was prepared by a heat-sealing process, and this was extracted together with 250 cc of hot water of 90˚C in a container for 2 minutes while continuing to stir with a stirring rod. Thereafter, the concentration of an extract after the bag had been taken out and powder leakage were observed. For the concentration, compared to the case where 10 g of powdered green tea of middle grade was directly placed in hot water and extracted, the case where the approximately equivalent concentration was obtained was taken as ◎, the case where the concentration was somewhat thin was taken as ○, and the case where it was clearly thin was taken as ×.

Stability of Sealed Portion in Hot Water

After immersed in boiling water for 3 minutes, it was observed whether a sealed portion was separated or not.

◎: No separation occurs even when stirred in hot water, and no separation occurs even when the sealed portion is pulled with fingers after takeout.
○: The sealed portion is partially separated when pulled with fingers after takeout, but no separation occurs when stirred in hot water, which practically causes no problem.
Δ: The sealed portion is easily separated when pulled after takeout, and partial separation is observed when stirred in hot water.
×: The sealed portion is separated by stirring in hot water to cause the powdered green tea of middle grade to flow out into the hot water, resulting in unsuitability as an extraction sheet.

Heat-Sealing Processability

The situation of adhesion to a sealing face of a heat sealer used in the above-mentioned heat-sealing strength test was observed.

Industrial Applicability

The air-laid sheets (1) to (3) for food extraction of the present invention are excellent in food extraction properties, heat-sealing properties and safety, and therefore, can be preferably used for uses such as green tea bags, tea bags, coffee bags and stock bags.

**Claims**

1. An air-laid sheet for food extraction produced by preparing a fiber web (1), by an air-laid process, which mainly comprises a heat-adhesive composite fiber (A) having a fineness of 1.0 to 4.5 dt wherein a sheath component as a low-melting component of a sheath-core type composite fiber or a low-melting component of a side-by-side type composite fiber has a melting point ($Tm_A$) of 110 to 170 ˚C, and performing interfiber bonding by heating to achieve integration.

2. The air-laid sheet for food extraction according to claim 1, wherein the basis weight of said fiber web (1) is from 10 to 50 g/m$^2$.

3. The air-laid sheet for food extraction according to claim 1 or 2, wherein the melting point ($Tm_A$) of the low-melting component of the heat-adhesive composite fiber (A) in the fiber web (1) is preferably from 110 to 155˚C.

4. The air-laid sheet for food extraction according to any one of claims 1 to 3, wherein the fiber web (1) is composed of 100% heat-adhesive composite fiber (A).

5. The synthetic fiber air-laid sheet for food extraction according to any one of claims 1 to 4, wherein the heat-adhesive composite fiber (A) is a polyester-based fiber.

6. An air-laid composite sheet for food extraction comprising at least two fiber web layers, wherein one fiber web is the fiber web (1) according to claim 1, and a fiber web on the opposite side is a fiber web (2) with a basis weight of 2 to 30 g/m$^2$ which comprises a mixture of a heat-adhesive composite fiber (B) having a fineness of 1.0 to 4.5 dt wherein a sheath component as a low-melting component of a sheath-core type composite fiber or a component on the low-melting side of a side-by-side type composite fiber has a melting point ($Tm_B$) of 130 to 200 ˚C and a high-melting synthetic fiber (C) having a melting point ($Tm_C$) of 200˚C or higher and a fineness of 0.5 to 7.0 dt; the melting point $Tm_A$ of the component on the low-melting side of the heat-adhesive composite fiber (A) and said $Tm_B$ satisfies the following equation (1) ; and these fiber webs are prepared in a layer form by an air-laid process, and interfiber bonding is performed by heating to achieve integration.

$$Tm_A \leq Tm_B \quad \cdots \cdots \quad (1)$$

7. The air-laid sheet for food extraction according to claim 6, wherein the basis weight of the fiber web (1) is from 2 to 30 g/m$^2$.

8. The air-laid composite sheet for food extraction according to claim 6 or 7, wherein the melting pint ($Tm_A$) of the low-melting component of the heat-adhesive composite fiber (A) constituting the fiber web (1) is from 110 to 155˚C.

9. The air-laid composite sheet for food extraction according to any one of claims 6 to 8, wherein the melting point ($Tm_B$) of the low-melting component of the heat-adhesive composite fiber (B) constituting the fiber web (2) is from 140 to 180˚C.

10. The air-laid composite sheet for food extraction according to any one of claims 6 to 9, wherein the melting point ($Tm_C$) of the high-melting synthetic fiber (C) constituting the fiber web (2) is from 210 to 280˚C.

**11.** The synthetic fiber air-laid composite sheet for food extraction according to any one of claims 6 to 10, wherein the heat-adhesive composite fibers (A) and (B) and the high-melting synthetic fiber (C) constituting the fiber webs (1) and (2) comprise a polyester-based component.

**12.** The (synthetic fiber) air-laid composite sheet for food extraction according to any one of claims 6 to 11, wherein the mixing ratio of the heat-adhesive composite fiber (B) and the high-melting synthetic fiber (C) constituting the fiber web (2) is from 80/20% by weight to 30/70% by weight.

**13.** The (synthetic fiber) air-laid composite sheet for food extraction according to any one of claims 6 to 12, wherein the fiber web (1) is composed of 100% heat-adhesive composite fiber (A), and the fiber web (2) is composed of 100% heat-adhesive composite fiber (B) and high-melting synthetic fiber (C).

**14.** A composite air-laid sheet for food extraction with a basis weight of 10 to 50 $g/m^2$ produced by forming the fiber web (1) according to claim 1 by an air-laid process on one side of a wet nonwoven fabric comprising pulp and the said heat-adhesive composite fiber (A) mixed at a ratio of 97/3% to 70/30% by weight and having a basis weight of 2 to 30 $g/m^2$ and an air permeability of 1.5 seconds or less, and laminating and integrating them.

**15.** The composite air-laid sheet for food extraction according to claim 14, wherein the basis weight of the fiber web (1) is from 2 to 30 $g/m^2$.

**16.** The composite air-laid sheet for food extraction according to claim 14 or 15, wherein the fiber web (1) formed by the air-laid process contains 80% or more of the heat-adhesive composite fiber (A).

**17.** The composite air-laid sheet for food extraction according to any one of claims 14 to 16, wherein the melting point ($Tm_A$) of the low-melting component of the heat-adhesive composite fiber (A) constituting said fiber web (1) and wet nonwoven fabric is from 110 to 155°C.

**18.** The composite air-laid sheet for food extraction according to any one of claims 14 to 17, wherein the heat-adhesive composite fiber (A) comprises a polyester-based component.

## INTERNATIONAL SEARCH REPORT

| | International application No. |
|---|---|
| | PCT/JP2005/020924 |

A.   CLASSIFICATION OF SUBJECT MATTER
*D04H1/72*(2006.01), *A47J31/06*(2006.01), *B32B5/26*(2006.01), *D04H1/54*
(2006.01)

According to International Patent Classification (IPC) or to both national classification and IPC

B.   FIELDS SEARCHED

Minimum documentation searched (classification system followed by classification symbols)
*D04H1/00-18/00*(2006.01), *B32B1/00-35/00*(2006.01), *A47J31/88-31/60*
(2006.01)

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
   WPI

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-139569 A  (Teijin Fibers Ltd.),<br>02 June, 2005 (02.06.05),<br>Claims; Par. Nos. [0011], [0033], [0036];<br>examples<br>(Family: none) | 1-5<br>6-13<br>14-18 |
| Y<br>A | JP 2001-315239 A  (Shinwa Kabushiki Kaisha),<br>13 November, 2001 (13.11.01),<br>Claims; Par. Nos. [0003], [0005], [0007],<br>[0009], [0010], [0019]<br>(Family: none) | 6-13<br>14-18 |
| Y<br>A | WO 2003/048439 A1  (Daiki Shoji Kabushiki<br>Kaisha, Kinboshi Seishi Kabushiki Kaisha),<br>12 June, 2003 (12.06.03),<br>Page 6, lines 18 to 22; examples<br>& EP 1455010 A1          & US 2005/0016382 A1 | 6-13<br>14-18 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   09 February, 2006 (09.02.06) | Date of mailing of the international search report<br>   21 February, 2006 (21.02.06) |
|---|---|
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/020924

C (Continuation).    DOCUMENTS CONSIDERED TO BE RELEVANT

| Category* | Citation of document, with indication, where appropriate, of the relevant passages | Relevant to claim No. |
|---|---|---|
| A | JP 7-213832 A  (PAPCEL-Papier und Cellulose Technologie-und Handels-GmbH), 15 August, 1995 (15.08.95), & EP 0656224 A1        & US 5601716 A | 14-18 |
| A | JP 11-042164 A  (House Foods Corp.), 16 February, 1999 (16.02.99), Full text (Family: none) | 14-18 |
| A | WO 2001/057316 A1  (Mitsui Chemicals, Inc.), 09 August, 2001 (09.08.01), Full text & EP 1266997 A1        & US 2003/0019598 A1 | 14-18 |
| A | JP 2005-087735 A  (Outlast Technologies, Inc.), 07 April, 2005 (07.04.05), Full text & EP 1514587 A1        & US 2005/061733 A1 | 14-18 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6065851 A
- JP 9268434 A

- JP 2001315239 A
- JP 9271617 A